# EUROPÄISCHE PATENTSCHRIFT

(11) **EP 0 638 578 B1**
(45) Veröffentlichungstag und Bekanntmachung des Hinweises auf die Patenterteilung: **01.09.1999**
(21) Anmeldenummer: 94110060.4
(22) Anmeldetag: 29.06.1994
(51) Int. Cl.: C07F 9/50, C07F 9/58

(54) **Sekundäre und tertiäre Phosphane und Verfahren zu ihrer Herstellung**
Secondary and tertiary phosphanes and process for their preparation
Phosphanes secondaires et tertiaires et procédé pour leur préparation

(30) Priorität: 31.07.1993 DE 4325816
(43) Veröffentlichungstag der Anmeldung: 15.02.1995
(73) Patentinhaber: Celanese GmbH, 60439 Frankfurt (DE)
(72) Erfinder: Stelzer, Othmar, Prof. Dr., D-42349 Wuppertal (DE); Herd, Oliver, D-42107 Wuppertal (DE); Weferling, Norbert, Dr., D-50354 Hürth (DE)

(56) Entgegenhaltungen:
- EP-A- 0 307 717
- GB-A- 2 262 284
- ANGEW. CHEM. (ANCEAD,00448249);93; VOL.105 (7); PP.1097-9, UNIV.-GESAMTHOCHSCH.;FACHBEREICH 9, ANORG. CHEM.; WUPPERTAL; D-42097; GERMANY (DE) Herd O et al 'Ein neuer Zugang zu wasserlöslischen Phosphanen mit para-sulfonierten Phenylsubstituenten- Kristallstruktur von P(C6H4-SO3K-p)3.KCl.0.5H2O'

## Beschreibung

Die vorliegende Erfindung betrifft sekundäre und tertiäre Phosphane sowie Verfahren zu ihrer Herstellung.

Wasserlösliche Phosphane, beispielsweise das Trinatriumsalz der Triphenylphosphan-tris-m-sulfonsäure, sind in den letzten Jahren als Liganden in Katalysatoren bei der Oxo-Synthese im Zweiphasensystem organisches Lösungsmittel/Wasser eingesetzt worden. Die Herstellung dieser wasserlöslichen Phosphane erfolgte bisher durch Umsetzung von Triphenylphosphan mit Oleum und Neutralisation des Reaktionsgemisches mit Natronlauge, wobei allerdings Gemische von Phosphanen, Phosphanoxiden und Phosphansulfiden mit unterschiedlichem Sulfonierungsgrad anfallen, welche in aufwendiger Weise durch Fällungs- und Extraktionsverfahren oder durch Gelpermeationschromatographie voneinander getrennt werden müssen. Stelzer et al. offenbaren das wasserlösliche Kaliumsalz der 4,4',4''-Phosphantriylbenzolsulfonsäure (Angew. Chem. 105 (1993, 1097-1099). Phosphane mit zweifach sulfonierten aromatischen Resten sind durch die Umsetzung von Triphenylphosphan mit Oleum nicht zugänglich.

Im einzelnen betrifft die Erfindung sekundäre und tertiäre Phosphane der allgemeinen Formel 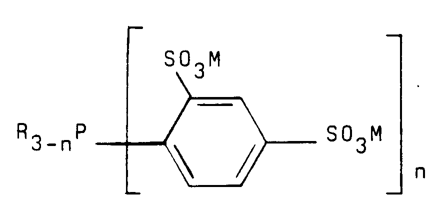 in der R Wasserstoff, eine Aryl- oder Benzylgruppe oder eine geradkettige oder verzweigte Alkylgruppe bedeutet, n 1 oder 2 ist und M für Kalium oder Natrium steht.

Zur Herstellung dieser Phosphane setzt man entweder Alkalisalze der Fluorbenzol-2,4-disulfonsäure mit Phosphorwasserstoff, primären oder sekundären Phosphanen in einem aprotischen Lösungsmittel in Gegenwart von mindestens stöchiometrischen Mengen festen pulverisierten Alkalihydroxids bei Temperaturen von 0 bis 100 °C um, wobei die Umsetzung bei Drucken bis zu 10 bar, vorzugsweise bis zu 2 bar, erfolgen kann oder man setzt sekundäres Phosphan vom Typ HP[C₆H₃-2,4-(SO₃M)₂]₂ mit einer Verbindung RX, in welcher R für eine Alkyl-, Aryl- oder Benzylgruppe steht und X ein Halogen ist, in einem aprotischen Lösungsmittel in Gegenwart von mindestens stöchiometrischen Mengen festen pulverisierten Alkalihydroxids bei Temperaturen von 0 bis 100 °C um.

Die Verfahren zur Herstellung dieser Phosphane können wahlweise auch noch dadurch ausgestaltet sein, daß
a) als Lösungsmittel Dimethylsulfoxid dient;
b) als Lösungsmittel Glykolether dienen;
c) als Alkalihydroxid Kaliumhydroxid verwendet ist.

Die sekundären und tertiären Phosphane gemäß der Erfindung können als Zwischenprodukte bei der Synthese von Arznei- und Pflanzenschutzmitteln dienen.

Das Kaliumsalz der Fluorbenzol-2,4-disulfonsäure ist nach folgender Arbeitsvorschrift erhältlich:
93,3 ml (1 mol) Fluorbenzol wurden in einer Stunde in 200 ml Chlorsulfonsäure eingetropft. Nach Beendigung der Chlorwasserstoffentwicklung wurde das Reaktionsgemisch 2 Stunden bei Raumtemperatur gerührt und anschließend auf 300 g Eis gegossen. Es wurde mit Chloroform extrahiert und die organische Phase mit 50 ml Wasser und gesättigter Natriumhydrogencarbonat-Lösung gewaschen. Die Destillation der organischen Phase im Vakuum lieferte 175 g (90 % d.Th.) p-FC₆H₄SO₂Cl (Siedepunkt: 86 bis 88°C bei 0,1 mbar; Schmelzpunkt: 35 bis 38°C).

30 g (0,15 mol) p-FC₆H₄SO₂Cl wurden 5 Stunden mit 25 ml Oleum (17 %ig) auf 200°C erhitzt. Anschließend wurde das Reaktionsgemisch auf 250 g Eis gegossen und mit 20 g (0,14 mol) Kaliumcarbonat versetzt. Das anfallende Rohprodukt wurde einmal aus Wasser umkristallisiert.
Ausbeute: 48,0 g (87 % d.Th.)

| | | | |
|---|---|---|---|
| C₆H₃FK₂O₆S₂ . 2H₂O (M = 368,4) | Ber.: | C 19,56 % | H 1,92 % |
| | Gef.: | C 19,31 % | H 1,71 % |

¹⁹F-NMR (CCl₃F): - 119.0; ¹H-NMR: H3 8.3; dd, J(HF) = 6.6; J(HH) = 2.4; H5 8.1 ddd, J(HF) = 4.6, J(HH) = 2.4, 8.6; H6 7.5, dd, J(HF) = 9.9, J(HH) = 8.6; ¹³C[¹H]-NMR: C1 161.2, d (255.4); C2 (SO₃K) 131.4, d (17.6); C3 132.2, d (9.8); C4 (SO₃K) 140.0; C5 127.2, d (1,9); C6 118.8 (23.3).

### Beispiel 1

### Hersteilung von HP[C₆H₃-2,4-(SO₃K)₂]₂

12 g festes pulverisiertes Kaliumhydroxid (85 %ig;0,18 mol) und 20 g Molekularsieb (3 Å) wurden in 60 ml Dimethylsulfoxid suspendiert. Die Suspension wurde bei einem Überdruck von 0,1 bar mit PH₃ unter Bildung einer schwach gelb gefärbten Lösung gesättigt. Zu dieser Lösung wurden im Verlauf einer Stunde 20 g (60 mmol) des Kaliumsalzes der Fluorbenzol-2,4-disulfonsäure hinzugefügt und anschließend 12 Stunden bei 60°C gerührt, wobei der PH₃-Überdruck von 0,1 bar durch Nachdosieren aufrechterhalten wurde. Die resultierende dunkelrote Lösung wurde mit wäßriger Flußsäure neutralisiert und mit 200 ml Ethanol versetzt. Dabei fiel ein Niederschlag aus, welcher abfiltriert, dreimal mit je 30 ml Methanol gewaschen und anschließend aus Wasser umkristallisiert wurde.
Ausbeute: 11,3 g (57 % d.Th.)

| | | | |
|---|---|---|---|
| C₁₂H₇K₄O₁₂PS₄ . 2H₂O (M = 694,8) | Ber.: | C 20,74 | H 1,60 |
| | Gef.: | C 21,14 | H 1,67 |

³¹P-NMR: -46.5, d (244.9); ¹³C[¹H]-NMR (TMS): C1 (P)137.8, d (22.9); C2 (SO₃K) 147.6 d (19.3); C3 138.7; C4 (SO₃K) 144.2; C5 128.7; C6 124.8, d (2.5); ¹H-NMR: H3 8.3, dd, J(PH) = 2.3, J(HH) = 1.7; H5 7.7, dd, J(HH) = 1.7, 8.0; H6 7.4, dd, J(HH) = 8.0, J(PH) = 3.9; H(PH) 5.7, d (239.1).

### Beispiel 2

### Herstellung von C₆H₅P[C₆H₃-2,4-(SO₃K)₂]₂

2,8 g (25 mmol) Phenylphosphan wurden in 50 ml Dimethylsulfoxid gelöst und mit 3,3 g (50 mmol) festem pulverisiertem Kaliumhydroxid versetzt. Zu dieser Lösung wurde im Laufe einer Stunde eine Suspension von 16,6 g (50 mmol)F-C₆H₃-2,4-(SO₃K)₂ in 50 ml Dimethylsulfoxid gegeben. Das Reaktionsgemisch wurde anschließend 12 Stunden bei 60 °C gerührt. Auf Zugabe von 150 bis 200 ml Ethanol fiel ein weißer Niederschlag aus, welcher über eine Umkehrfritte abfiltriert wurde. Der abfiltrierte Niederschlag wurde dreimal mit je 30 ml Methanol gewaschen und schließlich aus Wasser umkristallisiert.
Ausbeute: 12,1 g (60 % d. Th.)

| | | | |
|---|---|---|---|
| C₁₈H₁₁K₄O₁₂PS₄ . 4H₂O (M = 806,9) | Ber.: | C 26,79 | H 2,37 |
| | Gef.: | C 26,98 | H 2,27 |

³¹P[¹H]-NMR: - 13,2

### Beispiel 3

### Herstellung von C₆H₅P[C₆H₃-2,4-(SO₃K)₂]₂

Zu 2,8 g (25 mmol) Phenylphosphan, gelöst in 150 ml Ethylenglykoldimethylether, wurden 6,6 g (100 mmol) festes pulverisiertes Kaliumhydroxid gegeben. Nach Zugabe von 16,6 g (50 mmol) des Kaliumsalzes der Fluorbenzol-2,4-disulfonsäure wurde das Reaktionsgemisch 36 Stunden bei 80 °C gerührt. Der nach Abziehen des Lösungsmittels im Vakuum (0,1 mbar, 20 - 50 °C) verbleibende Rückstand wurde dreimal mit je 20 ml Wasser umkristallisiert.
Ausbeute: 4,0 g (20 % d. Th.)

### Beispiel 4

### Herstellung von (C₆H₅)₂P[C₆H₃-2,4-(SO₃K)₂]

4,7 g (25 mmol) Diphenylphosphan wurden in 50 ml Dimethylsulfoxid gelöst und mit 1,6 g (25 mmol) festem pulverisiertem Kaliumhydroxid versetzt. Zu dieser Lösung wurde im Laufe einer Stunde eine Suspension von 8,3 g (25 mmol) F-C₆H₃-2,4-(SO₃K)₂ in 50 ml Dimethylsulfoxid gegeben und das Reaktionsgemisch anschließend 12 Stunden bei 60 °C gerührt. Nach Zugabe von 200 ml Ethanol fiel ein weißer Niederschlag aus, von dem abfiltriert wurde. Der abfiltrierte Niederschlag wurde dreimal mit je 30 ml Methanol gewaschen und anschließend aus Wasser umkristallisiert.
Ausbeute: 7,7 g (58 % d. Th.)

| | | | |
|---|---|---|---|
| C₁₈H₁₃K₂O₆PS₂ . 2H₂O (M = 534,6) | Ber.: | C 40,44 | H 3,21 |
| | Gef.: | C 40,89 | H 3,58 |

³¹P[¹H]-NMR: - 10,8

### Beispiel 5

### Herstellung von C₅NH₄-P[C₆H₃-2,4-(SO₃K)₂]₂

Eine Lösung von 0,84 g (7,5 mmol) 2-Pyridylphosphan in 60 ml Dimethylsulfoxid wurde mit 1,2 g (18 mmol) festem pulverisiertem Kaliumhydroxid versetzt. Nach Zugabe von 4,98 g (15 mmol) des Kaliumsalzes der Fluorbenzol-2,4-disulfonsäure wurde das Reaktionsgemisch 12 Stunden bei 20 - 60 °C gerührt. Auf Zugabe von 50 ml Ethanol fiel ein weißer Niederschlag aus, der abfiltriert und dreimal mit je 30 ml Methanol gewaschen und schließlich aus 20 ml Wasser umkristallisiert wurde.
Ausbeute: 2 g (36 % d. Th.)

³¹P[¹H]-NMR: - 13.0; ¹³C[¹H]-NMR (TMS): C1 (P) 138.1, d (26.0); C2 (SO₃K) 148.9, d (25.9); C3 137.7; C4 (SO₃K) 144.9; C5 128.9; C6 125.8, d (4.1); C7 (P, N)) 162.9, d (6.2); C8 130.7, d (13.0); C9 138:5, d (1.9); C10 124.9; C11 (N) 150.6, d (13.9).

### Beispiel 6

Zu 3,0 g (4,3 mmol) HP[C₆H₃-2,4-(SO₃K)₂]₂, gelöst in 60 ml Dimethylsulfoxid, wurden 0,4 g (4,3 mmol) Monofluorbenzol gegeben und die Mischung mit 0,3 g festem, pulverisiertem KOH versetzt. Danach wurde das Reaktionsgemisch 12 Stunden bei 60 °C gerührt. Auf Zugabe von 100 ml Ethanol fiel ein weißer Niederschlag aus, von dem über eine Umkehrfritte abfiltriert wurde. Der abfiltrierte Niederschlag wurde dreimal mit je 30 ml Methanol gewaschen und aus Wasser umkristallisiert.
Ausbeute: 1,6 g (45 % d. Th.)

| | | | |
|---|---|---|---|
| C₁₈H₁₁K₄O₁₂PS₄ . 4H₂O (M = 806,9) | Ber.: | C 26,79 | H 2,37 |
| | Gef.: | C 26,98 | H 2,27 |

³¹P[¹H]-NMR: - 13,2

### Beispiel 7

Zu einer Lösung von 6,0 g (8,6 mmol) HP[C₆H₃-2,4-(SO₃K)₂]₂ wurden 1,2 g (8,6 mmol) n-Butylbromid gegeben. In diese Mischung wurden im Verlauf von einer Stunde 0,6 g (9,5 mmol) festes pulverisiertes Kaliumhydroxid eingebracht. Danach wurde das Reaktionsgemisch 12 Stunden bei 60 °C gerührt. Nach Zugabe von 100 ml Ethanol fiel ein weißer Niederschlag aus, der über eine Umkehrfritte abfiltriert wurde. Der abfiltrierte Niederschlag wurde dreimal mit jeweils 30 ml Methanol gewaschen und aus Wasser umkristallisiert.
Ausbeute: 2,6 g (38 % d. Th.)

| | | | |
|---|---|---|---|
| C₁₆H₁₅K₄O₁₂PS₄ . 4H₂O (M = 787,0) | Ber.: | C 24,42 | H 2,95 |
| | Gef.: | C 24,74 | H 2,94 |

³¹P[¹H]-NMR: -23,9

### Beispiel 8

Zu 1,04 g (1,5 mmol) des sekundären Phosphans HP[C₆H₃-2,4-(SO₃K)₂]₂, gelöst in 40 ml Dimethylsulfoxid, wurden 0,26 g (1,5 mmol) Benzylbromid zugegeben und die Mischung portionsweise mit 0,11 g (1,7 mmol) festem pulverisiertem Kaliumhydroxid versetzt. Danach wurde das Reaktionsgemisch 12 Stunden bei 20 °C gerührt. Nach Zugabe von 100 ml Ethanol fiel ein weißer Niederschlag aus, von dem über eine Umkehrfritte abfiltriert wurde. Der abfiltrierte Niederschlag wurde aus 50 ml heißem Methanol umkristallisiert.
Ausbeute: 0,55 g (49 % d. Th.)

³¹P[¹H]-NMR: - 16.0; ¹³C[¹H]-NMR (TMS): C1 (P) 139.8, d (31.1); C2 (SO₃K) 148.5, d (25.5); C3 136.1; C4 (SO₃K) 144.4; C6 125.9, d (3.8); C7 (i, Bz) 139.1, d (10.3); 130.3, d (8.6); 129.7; 128.7; 127.3, d (2.4) [C5, C8 (0, Bz), C9 (m, Bz), C10 (p, Bz)]; CH₂ 34.3,d (15.8),

## Patentansprüche

1. Sekundäre und tertiäre Phosphane der allgemeinen Formel 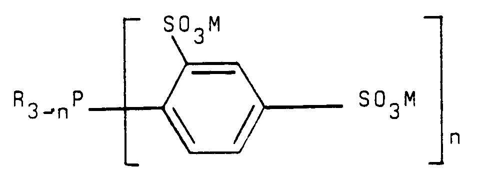 in der R Wasserstoff, eine Aryl- oder Benzylgruppe oder eine geradkettige oder verzweigte Alkylgruppe bedeutet, n 1 oder 2 ist und M für Kalium oder Natrium steht.

2. Verfahren zur Herstellung der Phosphane nach Anspruch 1, dadurch gekennzeichnet, daß man Alkalisalze der Fluorbenzol-2,4-disulfonsäure mit Phosphorwasserstoff, primären oder sekundären Phosphanen in einem aprotischen Lösungsmittel in Gegenwart von mindestens stöchiometrischen Mengen festen pulverisierten Alkalihydroxids bei Temperaturen von 0 bis 100°C umsetzt.

3. Verfahren nach Anspruch 2, dadurch gekennzeichnet, daß die Umsetzung bei Drucken bis zu 10 bar, vorzugsweise bis zu 2 bar, erfolgt.

4. Verfahren zur Herstellung der Phosphane nach Anspruch 1, dadurch gekennzeichnet, daß man ein sekundäres Phosphan vom Typ HP[C₆H₃-2,4-(SO₃M)₂]₂ mit einer Verbindung RX, in welcher R für eine Alkyl-, Aryl- oder Benzylgruppe steht und X ein Halogen ist, in einem aprotischen Lösungsmittel in Gegenwart von mindestens stöchiometrischen Mengen festen pulverisierten Alkalihydroxids bei Temperaturen von 0 bis 100 °C umsetzt.

5. Verfahren nach mindestens einem der Ansprüche 2 bis 4, dadurch gekennzeichnet, daß als Lösungsmittel Dimethylsulfoxid dient.

6. Verfahren nach mindestens einem der Ansprüche 2 bis 4, dadurch gekennzeichnet, daß als Lösungsmittel Glykolether dienen.

7. Verfahren nach mindestens einem der Ansprüche 2 bis 6, dadurch gekennzeichnet, daß als Alkalihydroxid Kaliumhydroxid verwendet ist.

## Claims

1. Secondary and tertiary phosphanes of the formula 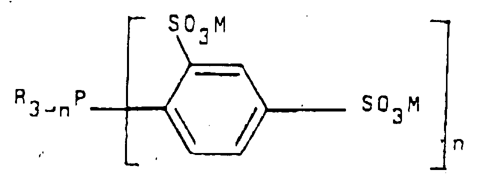 where R stands for hydrogen, an aryl or benzyl group or a straight-chain or branched alkyl group, n is 1 or 2 and M denotes potassium or sodium.

2. The process for the preparation of phosphanes according to claim 1, characterised in that alkali metal salts of fluorobenzene-2,4-disulfonic acid are reacted with hydrogen phosphide, primary or secondary phosphanes in an apriotic solvent in the presence of at least stoichiometric amounts of solid pulverised alkali metal hydroxide at temperatures of 0 to 100°C.

3. The process according to claim 2, characterised in that the reaction takes place at pressures of up to 10 bar, preferably up to 2 bar.

4. The process for the preparation of phosphanes according to claim 1, characterised in that a secondary phosphane of the type HP [C₆H₃-2,4-(SO₃M)₂]₂ is reacted with a compound RX, in which R stands for an alkyl, aryl or benzyl group and X is a halogen, in an apriotic solvent in the presence of at least stoichiometric amounts of solid pulverised alkali metal hydroxide at temperatures of 0 to 100°C.

5. The process according to at least one of the claims 2 through 4, characterised in that dimethylsulfoxide is used as the solvent.

6. The process according to at least one of the claims 2 through 4, characterised in that glycol ether is used as the solvent.

7. The process according to at least one of the claims 2 through 6, characterised in that potassium hydroxide is used as the alkali metal hydroxide.

## Revendications

1. Phosphanes secondaires et tertiaires de la formule générale 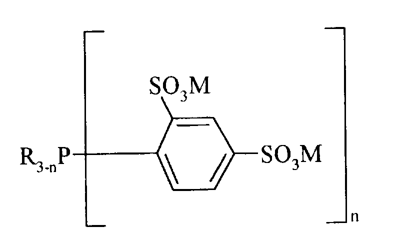 dans laquelle R représente l'hydrogène, un groupe aryle ou benzyle ou un groupe alkyle linéaire ou ramifié, n est égal à 1 ou à 2 et M représente le potassium ou le sodium.

2. Procédé pour la préparation des phosphanes selon la revendication 1, caractérisé en ce que l'on fait réagir des sels alcalins de l'acide fluorobenzène-2,4-disulfonique avec de l'hydrogène phosphoré, des phosphanes primaires ou secondaires dans un solvant aprotique en présence de quantités au moins stoechiométriques d'hydroxyde d'alcali solide pulvérisé à des températures de 0 à 100°C.

3. Procédé selon la revendication 2, caractérisé en ce que la réaction est réalisée à des pressions allant jusqu'à 10 bar, de préférence allant jusqu'à 2 bar.

4. Procédé pour la préparation des phosphanes selon la revendication 1, caractérisé en ce que l'on fait réagir un phosphane secondaire du type HP[C₆H₃-2,4-(SO₃M)₂]₂ avec un composé RX, dans lequel R représente un groupe alkyle aryle ou benzyle et X est un halogène, dans un solvant aprotique en présence de quantités au moins stoechiométriques d'hydroxyde d'alcali solide pulvérisé à des températures de 0 à 100°C.

5. Procédé selon au moins l'une quelconque des revendications 2 à 4, caractérisé en ce que le diméthylsulfoxyde sert de solvant.

6. Procédé selon au moins l'une quelconque des revendications 2 à 4, caractérisé en ce que le glycoléther sert de solvant.

7. Procédé selon au moins l'une quelconque des revendications 2 à 6, caractérisé en ce que l'on utilise comme hydroxyde d'alcali de l'hydroxyde de potassium.
